# EUROPEAN PATENT APPLICATION

(11) **EP 0 637 714 A1**
(43) Date of publication of application: **08.02.1995**
(21) Application number: 94305733.1
(22) Date of filing: 02.08.1994
(51) Int. Cl.: F16P 3/12

(54) **Safety mechanisms for mobile units**

(30) Priority: 04.08.1993 GB 9316119
(71) Applicant: Barpro Group Plc, Birmingham B60 3DU (GB)
(72) Inventor: Jones, Kenneth, Gnosall, Staffordshire ST20 0EU (GB)
(74) Representative: Lawrence, John

(57) **Abstract**

A safety mechanism for a mobile rack storage system (10,12) has a sensor probe or trip bar (20) which is moveable between a first operative positon, whilst the mobile rack (10,12) is in motion, to a second, inoperative, position, whilst the mobile rack (10,12) is stationary. In the first position the proble (20) is able to sense the presence of an object obstructing movement of the mobile rack (10,12). In the second position the probe (20) is retracted into a protected position and the sensor probe is not able to sense an obstructing obstacle. A solenoid assembly (24) drives the probe (20) between the first and second positions.

## Description

The present invention relates to safety mechanisms for mobile units. It has particular application to mobile storage rack units, and will be described herein with reference thereto. However, the invention may find further application wherever a unit is being driven under power in situations in which a person or an obstacle might find itself in the path of the mobile unit.

Mobile storage rack units are typically used where there is a requirement for large and versatile storage capacity within a small space. In a typical installation, a multiplicity of mobile storage rack units are arranged for movement on a common track in a supporting floor. The units may be moved under power along the track to create an aisle between two adjacent units along which stock may be loaded into or removed from the units, the remaining units typically being brought into close proximity to one another so minimising the space that they occupy.

Clearly, it is most desirable in practical terms essential that such units are provided with safety devices to halt their movement in the event that they collide with an object or person in their path.

Conventionally, each unit is provided with one or more trip mechanisms. Each trip mechanism typically comprises an elongate bar extending perpendicular to the direction of movement of the unit substantially along the length of the unit, and close to and parallel to the floor. The bar is arranged, in its normal position, to project from the unit in a direction of movement thereof. The bar is typically arranged such that on application thereto of a force directed towards the unit, it may move towards the unit, such movement causing actuation of detection means, such as a switch, operative to cause movement of the unit to be halted. An example of such a known trip mechanism is disclosed in GB 1 469 293. The reader is directed to read GB 1 469 293 to see the sort of shelf racking storage system to which the present invention is especially applicable.

It has been found that conventional trip mechanisms may be prone to damage, at least partly because in their normal position a portion of each bar projects from the unit making it vulnerable to collision from moving equipment used to load and unload the units. A single collision may cause significant damage, rendering the unit inoperable, so effectively making much stock inaccessible, and necessitating a costly repair. Whilst one or more units are inoperable, the mobile rack storage system itself may be inoperable and in terms of down-time this can be very costly indeed.

The present invention aims to provide a trip mechanism which is less prone to such damage.

According to a first aspect the invention may comprise a safety mechanism for a mobile article, the safety mechanism having a sensor probe which has a first, operative, condition in which it is operative to sense the presence of an obstruction in a hazard zone adjacent the mobile article, and a second, inoperative, condition in which it is more protected from damage than it is when it is in its first condition.

The invention resides at least in part in appreciating that the sensor probe need only be operative when the article is moving - since that is the only time that someone or something can be hit by the article. Once appreciated this seems self-evident, but until now no-one before the applicant had realised this.

Preferably when the sensor probe is in its inoperative condition it is in a retracted position in comparison with its position when it is in its operative condition.

The mechanism of the present invention may thus be less likely to become damaged since its probe may be withdrawn when not in use.

Preferably the probe is a contact probe, but it could be a non-contact sensor (such as an optical, photoelectric, or infra-red sensor).

Preferably the mechanism has drive means adapted to move the sensor probe from its operative position to its inoperative position.

There may also be drive means adapted to advance the probe to its operative position. The advancement drive means may be the same drive means as the retraction drive means.

The sensor probe is preferably moved to its operative condition when the article is moving. It may be advanced to its operative position either before the article moves, as it moves, or shortly after it starts moving.

Since the sensor probe need only be in its operative position when it is actually required to be operative to detect an obstacle, it is preferably moved to its inoperative, or withdrawn position when the mobile unit is in a position where the probe is vulnerable, so as to offer optimum protection for the probe. The probe may be withdrawn at substantially all times that the article is not moving, about to move, or just stopped moving, and at times when the probe is vulnerable (for example when a probe is at a closed aisle it will not be vulnerable).

Where the invention is to be applied to a mobile storage unit, the probe will typically be constituted by a trip bar or cross member as described in the fourth paragraph of the specification. However, it may take any other suitable form.

The sensor probe preferably projects in the direction of movement of the article, when it is in its inoperative condition, no further (or substantially no further) than the forward region of a protective member.

Preferably, in the inoperative, withdrawn, position, the probe is withdrawn into a slot or recess of the unit and does not substantially project therefrom, or is arranged to occupy such a position with respect to a protective member of the unit that the protective member protects the probe from impacts. In a preferred embodiment where the probe is in the form of a bar, a buffer beam is mounted above the bar.

Conveniently, the drive means may comprise an electric solenoid. Most preferably, the solenoid is double-acting, a first action causing the probe to move from its inoperative, withdrawn position to its operative position, and a second action causing the reverse movement. This preferred arrangement may be arranged such that the probe is not resiliently biased towards either of its operative or withdrawn positions. This may have the advantage that the mechanism can be arranged to be sensitive to smaller forces on its probe than is possible it biasing is adopted.

The sensor probe will typically activate a relative movement sensor such as an electrical switch.

In another of its aspects the invention provides a method of operating a safety trip mechanism for a mobile unit comprising the steps of moving a probe of the mechanism to an operative position prior to, or on, movement of the unit, monitoring the probe for actuation of the probe in response to the presence of an obstacle during movement of the unit, and stopping movement of the unit in response to actuation of the probe.

Preferably the probe is moved to a withdrawn position after movement of the article has stopped, or after power to move the article has been stopped.

According to another aspect the invention may comprise a kit for fitting to a mobile rack, storage system, the kit comprising drive means adapted to move a trip bar or other sensor probe of the system to an advanced or retracted position, and control means adapted to control the operation of the drive means so as to put the trip bar in a projecting position when the rack to which it is fitted in use is moving.

Preferably the drive means is adapted to retract the trip bar or other sensor plate to a protected position, and the control means is adapted to control the drive means so as to move the trip bar to the protected position when the rack is stationary.

The invention may also be seen as a method of reducing the cost of maintenance of a mobile rack storage system, or of reducing its down-time.

An embodiment of the invention will now be described in detail by way of example only with reference to the accompanying drawings wherein:
Figure 1 is a somewhat schematic side view of a safety trip mechanism embodying the invention mounted on a chassis frame of a mobile storage unit;
Figure 2 shows in detail a detection means suitable for use with the mechanism of Figure 1;

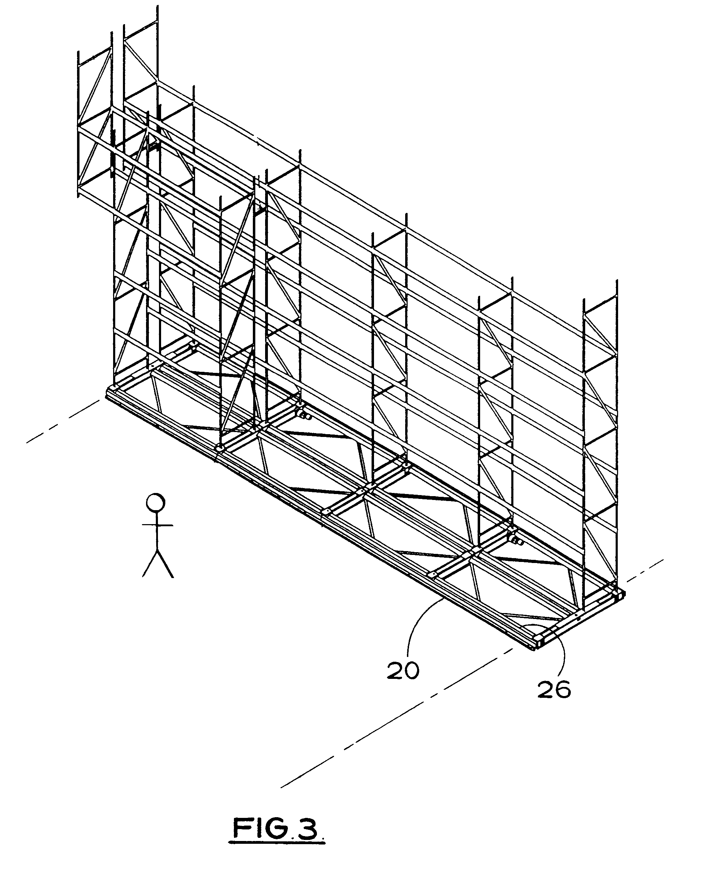

Figure 3 shows a general view of a shelf racking storage system of the kind to which the mechanism of Figures 1 and 2 can be fitted; and
Figures 4a to 4c show a mounting bracket for the trip mechanism.

A mobile storage unit having a number of rows of shelving comprises a chassis frame 10 upon which the unit is generally constructed. The chassis frame 10 carries a plurality of wheels 12 on which it is supported for bidirectional rectilinear movement along a track 14 in a supporting floor 16. One or more electric motors (not shown) are provided to drive at least one of the wheels 12 and so cause the said movement of the unit, the (or each) motor being controlled by a control unit (not shown). The motors are reversible under the control of the control unit so that the storage unit may be driven in both directions along the track 14.

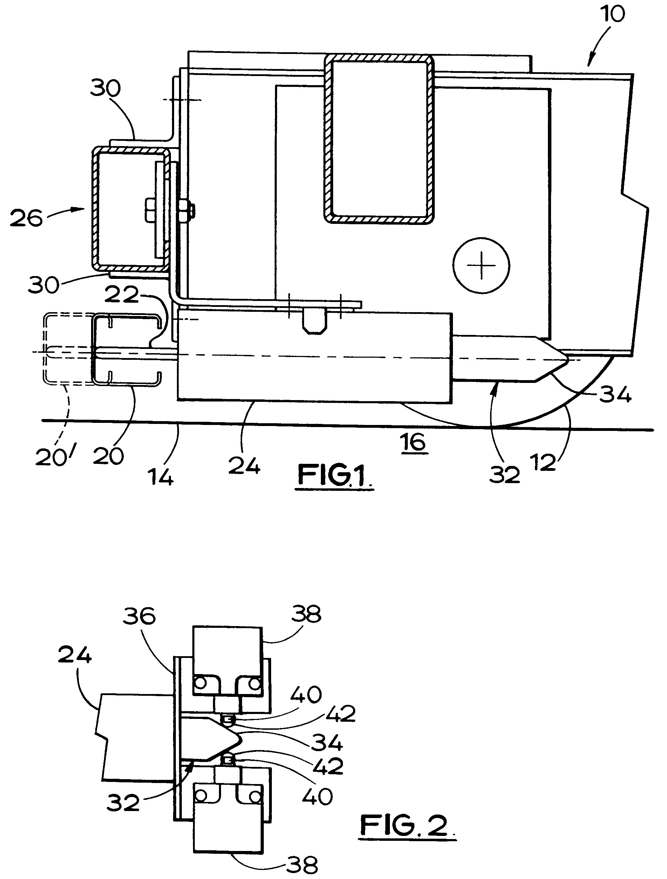

A safety trip mechanism is mounted on the chassis frame 10 at opposite extremities thereof, each having a trip bar extending across the chassis frame 10 transverse to the direction of movement of the unit on the track 14. Each safety trip mechanism is responsible for protection of the unit during movement in a respective direction. The safety trip mechanism illustrated in Figure 1 protects the unit during movement to the left of the figure.

The safety trip mechanism comprises a sensor probe, or trip bar, 20, a drive mechanism for the trip bar, and an electric controller (not shown). The trip bar 20 is attached to a push rod 22 which is borne for movement by a solenoid assembly 24 (which is the drive mechanism for the trip bar).

The trip bar 20 is disposed substantially parallel to and spaced a short distance from the supporting floor 16, and extends transversely across the unit transverse to the line of movement of the unit along the track 14. The push rod 22 and the solenoid assembly 24 are arranged to allow limited rectilinear (or swinging arcuate) movement of the trip bar 20 in a direction parallel to the direction of movement of the unit on the track 14.

The solenoid assembly 24 comprises a double-acting solenoid through which a portion of the push rod 22 or an extension thereof passes. Application of electrical current by the control unit to the solenoid causes the solenoid to act in a first direction and applies a force to the push rod 22 which urges it to the left as shown in Figure 1, so causing the trip bar 20 to be urged towards its operative position (shown at 20'). On application of current in the reverse direction, the force on the push rod 22 is reversed, so urging the trip bar 20 towards its withdrawn position (as shown in solid lines). While the solenoid remains de-energised substantially no force is applied to the push rod 22 which can therefore rest in its operative, advanced, position.

A cross member 26 of the shelving or racking is rigidly mounted to the chassis frame 10. The cross member extends parallel to and above the trip bar 20, the member 26 presenting a substantially flat outer face which faces away from the unit. The cross member 26 additionally comprises brackets 30 mounted above and below the member to provide a substantial connection between the member 26 and the frame 10.

The cross member 26 is arranged such that when the trip bar 20 is in its inoperative, withdrawn position, the trip bar 20 substantially does not project horizontally past the member 26. Thus, while in its withdrawn position the trip bar 20 is protected by the member 26, particularly from side impacts from large objects (such as moving equipment) and from downward impacts from objects dropped from above (such as goods accidentally dropped during handling thereof). The cross-member 26 thus acts as protection means. While in its operative position, the trip bar 20 projects beyond the member 26 so that it will contact an obstacle in the path of the unit in advance of any fixed part of the unit (such as the cross member 26) contacting the obstacle. The distance by which the trip bar 20 projects beyond any fixed part of the unit while in its extended position is greater than the distance that the unit will travel before coming to rest following the trip bar 20 making contact with an obstacle. This ensures that no fixed part of the unit will come into contact with the obstacle in these circumstances, thus minimising the risk of the obstacle becoming crushed.

The push rod 22 is connected to a plunger 32 (as shown in Figs 1 and 2) which projects axially therefrom in a direction away from the trip bar 20. A portion of plunger 32 projects from the solenoid assembly 24. The plunger 32 has an end portion of circular cross-section remote from the push-rod 22 which tapers away from the push-rod 22 the said end portion having a frusto-conical outer cam surface 34.

The detection means illustrated in Figure 2 has been omitted from Figure 1 for clarity. The detection means comprises a bracket 36 secured to the solenoid assembly 24 on which bracket 36 is carried a pair of limit switches 38. Each limit switch 38 has an operating rod 40 projecting therefrom, the axial position of which with respect to the switch between two limits of travel determines whether the respective switch is in an open or closed state. Biasing means within each switch 38 urges the respective operating rod towards the limit of its travel outwardly from the switch. At an end portion of each operating plunger a roller 42 is mounted for rotation about on axis transverse to the axis of the operating rod 40. The switches 38 are mounted such that their operating rods 40 are coaxial and directed towards one another, their axes intersecting with the axis of the plunger 32. The rollers 42 are aligned with their axes transverse to that of the plunger 32.

While the trip bar 20 is in its operative position, the axis of the operating plungers 40 intersects the tapered end portion of the plunger 32, the switches 38 being spaced apart such that the rollers 42 make rolling contact with the cam surface 34. Movement of the plunger 32 to the right as shown in Figures 1 and 2 with respect to the chassis frame 10 (as, for example, would occur when the trip bar 20 meets an obstacle while the unit is moving to the left as shown in Figures 1 and 2) causes the rollers 42 to roll along the cam surface 34 so urging each operating rod 40 axially towards its respective switch 38 and so causing the switches 38 to change state.

The switches are operatively connected to the control unit which, upon detection of a change of state as described above, causes further movement of the unit to be halted. In this preferred embodiment, the switches 38 are connected in series, and their normal state (when the operating rod 40 is at the limit of its travel outwardly from the switch 38) is closed, the switches 38 being opened on rightward movement of the plunger 32. In this arrangement, should a connection to the switches 38 fail, or one switch 38 fails to open an actuation thereof by the plunger 32, the unit will be stopped.

In operation, when a unit is to be moved, the control unit first applies to the solenoid of the safety trip mechanism responsible for protecting the unit during movement in the required direction, current in the said first direction so moving the trip bar 20 to its operative position. Provided that there is no obstacle placed to prevent the trip bar 20 assuming its operative position, and provided also that the switches 38 are operating and that all connections to them are intact, the control unit will detect closure of the switches 38 and will enable the control system to start the motor to drive the unit in the desired direction. At any time, if the control unit detects opening of the switches 38, it will stop the motor as quickly as possible.

During normal operation of the unit, the motor will be stopped by the control unit once the unit has reached its desired position. Once the unit has stopped, the control unit will apply to the solenoid a current to move the trip bar 20 to its withdrawn position if the trip bar 20 will otherwise be at an exposed, vulnerable, position at an open aisle.

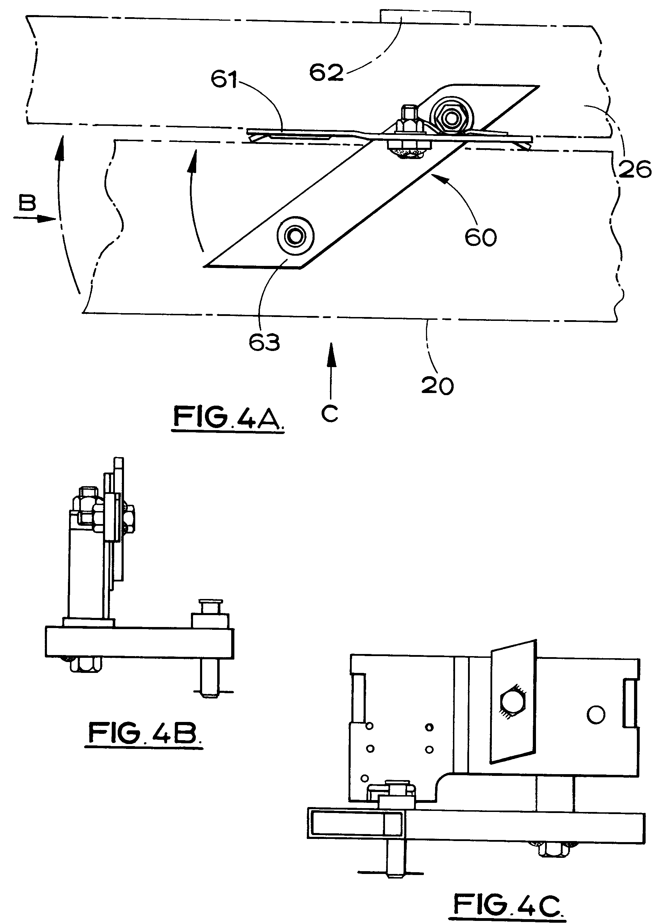

Figure 4a shows a plan view of a mounting bracket 60 having a front plate 61, a rear clamp plate 62, and a carrying arm 63 pivotally mounted on the plate 61. The arm 63 supports and mounts the trip bar 20. There will usually be several mounting brackets 60 supporting a trip bar (which is moved forwards and backwards relative to cross member 26 by a single double acting solenoid).

Figures 4b and 4c are side and front views of the mounting bracket.

The trip bar 20 can of course be mounted for arcuate, parallelogram, movement backwards (in which case the rod 22 would have an appropriate coupling with the bar accommodating such movement) , or it can be mounted for rectilinear movement (in which case an appropriate coupling to accommodate that movement would be provided between the bar and the arm 63).

We envisage supplying a storage system originally fitted with the sensor probe mechanism. We also envisage supplying kits to convert existing trip bar systems which have their trip bars advanced to their operative positions at all times (other than when actually in contact with an obstacle) to systems in which the sensor probe is retractable. The kit may have the means for moving the trip bar, an electrical or electronic controller (or a modification end or chop for an existing one) and appropriate wires to transmit signals and/or power. The kit may also include mounting members adapted to be clamped (or otherwise secured) to the cross member 26 to assist in mounting the trip bar 20.

It will be appreciated that the safety trip mechanism of the present invention could find many other applications such as on automatic doors, automatic, driverless vehicles, and mobile machinery for operation in a confined space.

## Claims

1. A safety mechanism for a mobile article (10, 12), the safety mechanism having a sensor probe (20) which has a first, operative, condition in which it is operative to sense the presence of an obstruction in a hazard zone adjacent the mobile article (10, 12), and a second, inoperative, condition in which it is more protected from damage than it is when it is in its first condition.

2. A mechanism according to claim 1 in which the sensor probe (20) is in its inoperative condition when it is in a retracted position.

3. A mechanism according to claim 1 or claim 2 in which the probe (20) is a contact probe.

4. A mechanism according to any preceding claim in which the mechanism has drive means (22, 24) adapted to move the sensor probe (20) between the operative and inoperative positions.

5. A mechanism according to any preceding claim in which the probe (20) is withdrawn at substantially all times that the article (10, 12) is not moving, about to move, or just stopped moving, and at times when the probe (20) is vulnerable.

6. A mechanism according to any preceding claim in which the sensor probe (20) is arranged to occupy such a position with respect to a protective member (26) of the unit that the protective member (26) protects the probe (20) from impacts.

7. A mobile rack storage system in which a mobile rack (10, 12), comprising a mobile article, is provided with a safety mechanism in accordance with any preceding claim.

8. A method of operating a safety trip mechanism for a mobile unit (10, 12) comprising the steps of moving a probe (20) of the mechanism to an operative position prior to, or on, movement of the unit (10, 12), monitoring the probe (20) for actuation of the probe (20) in response to the presence of an obstacle during movement of the unit (10, 12), and stopping movement of the unit (10, 12) in response to actuation of the probe (20).

9. A method according to claim 8 comprising the step of moving the probe (20) to a withdrawn position after movement of the unit (10, 12) has stopped, or after power to move the unit (10, 12) has been stopped.

10. A kit for fitting to a mobile rack storage system, the kit comprising drive means (22, 24) adapted to move a trip bar or other sensor probe (20) of the system (10, 12) to an advanced or retracted position, and control means adapted to control the operation of the drive means (22, 24) so as to put the trip bar (20) in a projecting position when the rack to which it is fitted in use is moving.
